(19) Europäisches Patentamt
European Patent Office
Office européen des brevets

(11) **EP 3 458 254 B1**

(12) **FASCICULE DE BREVET EUROPEEN**

(45) Date de publication et mention de la délivrance du brevet:
**07.07.2021 Bulletin 2021/27**

(21) Numéro de dépôt: **17729184.6**

(22) Date de dépôt: **22.05.2017**

(51) Int Cl.:
**B29D 30/00** (2006.01)   **B29D 30/08** (2006.01)
**B29D 30/24** (2006.01)   **B29D 30/26** (2006.01)
**B29D 30/32** (2006.01)   **B29D 30/36** (2006.01)

(86) Numéro de dépôt international:
**PCT/FR2017/051251**

(87) Numéro de publication internationale:
**WO 2017/198976 (23.11.2017 Gazette 2017/47)**

(54) **INSTALLATION DE RETROUSSAGE DESTINEE A LA FABRICATION D'EBAUCHES DE PNEUMATIQUES.**

AUFKLAPPSYSTEM ZUR HERSTELLUNG VON REIFENROHLINGEN.

FOLDING-UP SYSTEM FOR MANUFACTURING GREEN TIRES.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2016 FR 1654512**

(43) Date de publication de la demande:
**27.03.2019 Bulletin 2019/13**

(73) Titulaire: **Compagnie Générale des Etablissements Michelin**
**63000 Clermont-Ferrand (FR)**

(72) Inventeurs:
• **MASSOPTIER-DAVID, Michaël**
**63040 Clermont-Ferrand Cedex 9 (FR)**

• **DEBOEUF, Michel**
**63040 Clermont-Ferrand Cedex 9 (FR)**
• **RONDREUX, Pascal**
**63040 Clermont-Ferrand Cedex 9 (FR)**
• **HINC, Henri**
**63040 Clermont-Ferrand Cedex 9 (FR)**

(74) Mandataire: **Redouté, Gilles Pierre**
**M. F. P. Michelin**
**Service juridique - Propriété Intellectuelle**
**DCJ/PI - F35 - Site de Ladoux**
**23, place des Carmes-Déchaux**
**63040 Clermont-Ferrand Cedex 9 (FR)**

(56) Documents cités:
WO-A1-2011/065829   DE-C1- 19 934 791
JP-A- 2010 260 220   US-A1- 2006 180 263
US-A1- 2012 222 821   US-A1- 2013 139 971

## Description

L'invention concerne le retroussage d'ébauches de pneumatiques.

La fabrication d'une ébauche de pneumatique comprend une étape de retroussage qui consiste à appliquer une couche de gomme crue sur des flancs d'une ébauche de carcasse de pneumatique. Cette étape a pour but, d'une part, de fixer la couche de gomme crue sur chacun des flancs de l'ébauche de carcasse, et, d'autre part, de piéger une tringle, destinée à améliorer des propriétés mécaniques du pneumatique.

On connait de l'état de la technique une installation comprenant un fût, un support monté coulissant par rapport au fût, des bras articulés au support et des moyens de guidage, fixés sur le fût, pour guider des extrémités libres des bras. Les documents US 2006/180263 A1 et JP 2010 260220 A divulguent chacun une installation de fabrication d'ébauches de pneumatiques selon le préambule de la revendication 1.

Une telle installation fonctionne de la manière suivante. On installe l'ébauche de carcasse sur le fût. Des moyens d'entrainement, par exemple formés par un vérin pneumatique, font coulisser le support, et donc également les bras, en direction de l'ébauche. Lorsque les extrémités libres des bras arrivent en contact avec les moyens de guidage, ces derniers contraignent les bras à tourner par rapport au support dans le but de faire glisser les bras le long des flancs de l'ébauche pour appliquer la couche de gomme crue. En particulier, la rotation des bras est commandée par le coulissement du support. Une telle installation présente certains inconvénients.

En effet, les bras sont entrainés en translation et en rotation par le vérin pneumatique. On ne peut donc pas commander la pression qu'appliquent les bras sur la couche de gomme crue. Il s'ensuit qu'on risque d'appliquer soit une pression insuffisante sur la couche de gomme, ce qui pourrait nuire à sa bonne fixation sur l'ébauche, soit une pression trop importante, auquel cas la couche de gomme est laminée et donc détériorée.

De plus, il est difficilement envisageable d'ajuster la trajectoire des bras en fonction du type d'ébauche de pneumatique qu'on souhaite réaliser.

Un but de l'invention est d'améliorer la mise en place de la couche de gomme lors du retroussage.

A cet effet, on prévoit selon l'invention une installation de fabrication d'ébauches de pneumatiques selon la revendication 1.

Ainsi, l'installation de retroussage permet de commander la rotation des bras quelle que soit la vitesse et la position du support et même lorsque le support reste immobile par rapport au fût. Il est ainsi possible, quelles que soient la position et la vitesse du support par rapport au fût, de faire tourner les bras, ce qui rend possible le pilotage de la position des bras et de la pression qu'ils appliquent sur la couche de gomme crue une fois qu'ils sont en contact avec celle-ci, indépendamment de la position et de la vitesse du support. Cela rend également possible l'ajustement de la trajectoire des bras lors d'un procédé de retroussage en fonction du type d'ébauche de pneumatique à réaliser. En effet, des ébauches de différentes formes et/ou de différentes tailles imposent des trajectoires des bras différentes. On apporte donc de la souplesse dans le procédé de retroussage. Le fait que le coulissement et la rotation des bras soient indépendants de la position des bras par rapport à l'ébauche permet d'améliorer davantage la reproductibilité, et donc la qualité, du retroussage. Enfin, le pilotage en position et en pression permet d'améliorer la reproductibilité du retroussage et donc d'améliorer la qualité générale des pneumatiques fabriqués.

L'installation comprend en outre :

- une couronne montée mobile en rotation par rapport au support autour d'un axe principal du fût, et
- des moyens de conversion d'une rotation de la couronne en une rotation des bras par rapport au support.

La rotation de la couronne permet ainsi, à l'aide des moyens de conversion, de faire tourner en même temps tous les bras par rapport au support. On simplifie de la sorte la commande de la rotation des bras.

Les moyens de conversion comprennent :

- au moins une rampe hélicoïdale ménagée sur une face externe du support, et
- au moins un galet en appui contre la rampe et fixé à la couronne.

Avantageusement, les moyens de conversion comprennent, pour chaque bras, une bielle reliant le bras à la couronne.

Les moyens de conversion sont ainsi formés par des moyens simples.

Selon un premier mode de réalisation de l'invention, les moyens d'entrainement comprennent un équipage comprenant :

- un moteur, et
- des moyens de couplage aptes, au moyen d'un couple produit par le moteur, à entraîner la couronne en rotation par rapport au support autour d'un axe principal.

Ainsi, pour faire tourner les bras par rapport au support, il suffit de faire tourner la couronne par rapport au support à l'aide de l'équipage.

De préférence, la couronne présente au moins une denture sur une face externe, de préférence seulement sur une partie de la face externe, et les moyens de couplage de l'équipage sont formés par une roue dentée engrenée dans la denture de la couronne.

Les moyens de couplage sont ainsi formés par des moyens simples. De plus, le fait de ne doter d'une denture qu'une partie de la face externe de la couronne permet de simplifier la fabrication de la couronne.

Selon un second mode de réalisation de l'invention, les moyens d'entrainement comprennent :

- un moteur de fût apte à entrainer le fût en rotation par rapport à un bâti de l'installation autour de l'axe principal, et
- des moyens de blocage aptes à empêcher la rotation de la couronne par rapport au fût.

Ainsi, pour faire tourner les bras par rapport au support, il suffit de faire tourner le fût par rapport au bâti. Grâce aux moyens de blocage, la couronne reste immobile par rapport au bâti. Il s'ensuit que la couronne tourne par rapport au support.

De préférence, les moyens de blocage comprennent :

- un rail fixé à un bâti de l'installation et s'étendant parallèlement à l'axe principal, et
- une tige présentant une première extrémité montée coulissante dans le rail et une seconde extrémité fixée à la couronne.

Les moyens de blocage sont ainsi réalisés avec des moyens simples.

Selon un troisième mode de réalisation, qui ne fait pas partie de l'invention, le support comprend un premier organe de connexion monté coulissant par rapport au fût et un second organe de connexion monté coulissant par rapport au premier organe de connexion, les bras étant articulés d'une part au premier organe de connexion et d'autre part au second organe de connexion.

Ainsi, pour faire tourner les bras par rapport au support, il suffit de faire coulisser le second organe de connexion par rapport au premier organe de connexion.

De préférence, les premier et second organes de connexion comprennent chacun au moins un manchon.

Les organes de connexions sont ainsi réalisés avec des moyens simples et robustes.

De préférence, le second organe de connexion est monté sur le premier organe de connexion.

Le second organe de connexion est ainsi facile à agencer par rapport au premier organe de connexion.

De préférence, l'installation comprend en outre des moyens de poussée aptes à faire coulisser le premier organe de connexion par rapport au fût et aptes à faire coulisser le second organe de connexion par rapport au premier organe de connexion.

Les moyens de poussée mettent chacun des organes de connexion en coulissement par l'application d'un effort axial. On comprend ainsi que les moyens de poussée peuvent être formés par des moyens simples et adaptables à la structure de l'installation de retroussage.

De préférence, les moyens de poussée sont indépendants du fût.

Il est ainsi possible de faire tourner le fût indépendamment des moyens de poussée, ce qui apporte une souplesse dans l'utilisation de l'installation de retroussage.

Avantageusement, l'installation comprend en outre un organe de pilotage apte à piloter les moyens d'entrainement pour commander une position des bras.

Il est ainsi possible de charger dans cet organe de pilotage une trajectoire prédéfinie adaptée au type d'ébauche de pneumatique qu'on souhaite réaliser.

On prévoit également un procédé de retroussage d'une ébauche de pneumatique dans lequel :

- on installe l'ébauche sur un fût,
- un support coulisse par rapport au fût en direction de l'ébauche,
- des moyens d'entrainement font tourner des bras articulés au support, indépendamment du coulissement du support par rapport au fût, pour mettre les bras en contact avec l'ébauche.

On prévoit aussi un procédé de retroussage d'une ébauche de pneumatique dans lequel :

- on installe l'ébauche sur un fût,
- on fait tourner des bras articulés à un support,
- des moyens d'entrainement font coulisser le support par rapport au fût en direction de l'ébauche, indépendamment de la rotation des bras par rapport au support, pour mettre les bras en contact avec l'ébauche.

Comme cela a été avancé dans ce qui précède, l'indépendance entre la rotation de l'ébauche et le coulissement du support rend possible le pilotage de la position des bras et de la pression qu'ils appliquent sur la couche de gomme crue une fois qu'ils sont en contact avec celle-ci.

Avantageusement, un organe de pilotage commande les moyens d'entrainement pour déplacer les bras selon des trajectoires respectives prédéfinies.

Avantageusement, on déplace chaque bras entre une position initiale dans laquelle une extrémité libre du bras est éloignée de l'ébauche et une position finale dans laquelle l'extrémité libre a atteint une extrémité supérieure d'un flanc de l'ébauche.

On réalise ainsi l'intégralité du retroussage de l'ébauche.

Avantageusement, on déplace chaque bras de sorte que, dans une portion de la trajectoire du bras, son extrémité libre présente une composante de mouvement qui l'éloigne d'un centre de l'ébauche parallèlement à un axe principal du fût.

On peut ainsi adapter le procédé au retroussage d'une ébauche ayant un profil dit « en oméga », c'est-à-dire présentant un relief sur chacun de ses deux flancs qui oblige à un recul partiel de certains des bras lorsqu'ils parcourent la section correspondante de l'ébauche au cours du retroussage.

On va maintenant décrire trois modes de réalisation, dont les deux premiers font partie de l'invention, à l'appui des dessins annexés sur lesquels :

- la figure 1 est une vue en perspective d'une installation de fabrication d'ébauches de pneumatiques selon un premier mode de réalisation de l'invention,
- la figure 2 est une vue de l'installation de la figure 1 selon un angle différent et dans une autre configuration des bras,
- les figures 3 et 4 illustrent la rotation de bras articulés de l'installation de la figure 1,
- la figure 5 est une vue en perspective à échelle agrandie illustrant certaines pièces de l'installation de la figure 1,
- la figure 6 est une vue en coupe longitudinale de l'installation de la figure 5,
- la figure 7 illustre un support de l'installation de la figure 1,
- la figure 8 illustre une couronne de l'installation de la figure 1,
- les figures 9 et 10 illustrent un coulissement du support de l'installation de la figure 1,
- les figures 11 et 12 sont des représentations graphiques de deux trajectoires des bras permises par l'installation de la figure 1,
- la figure 13 est une vue en perspective d'une installation de fabrication d'ébauches de pneumatiques selon un second mode de réalisation de l'invention,
- les figures 14 et 15 sont des vues en perspective d'une installation de fabrication d'ébauches de pneumatiques selon un troisième mode de réalisation,
- les figures 16 et 17 sont des vues en coupe longitudinale de l'installation de la figure 15 dans des configurations différentes,
- la figure 18 est une vue en perspective selon un angle différent de l'installation de la figure 14,
- les figures 19 à 21 sont des vues en coupe longitudinale de l'installation de la figure 1 dans des configurations différentes,
- la figure 22 est une vue en coupe longitudinale d'une installation selon un quatrième mode de réalisation,
- la figure 23 est une vue en perspective de l'installation de la figure 22,
- les figures 24 à 26 illustrent un coulissement d'une base de l'installation de la figure 22,
- les figures 27 à 29 illustrent un coulissement d'un organe de connexion principal de l'installation de la figure 22, et
- les figures 30 à 32 illustrent un coulissement d'un organe de connexion secondaire de l'installation de la figure 22.

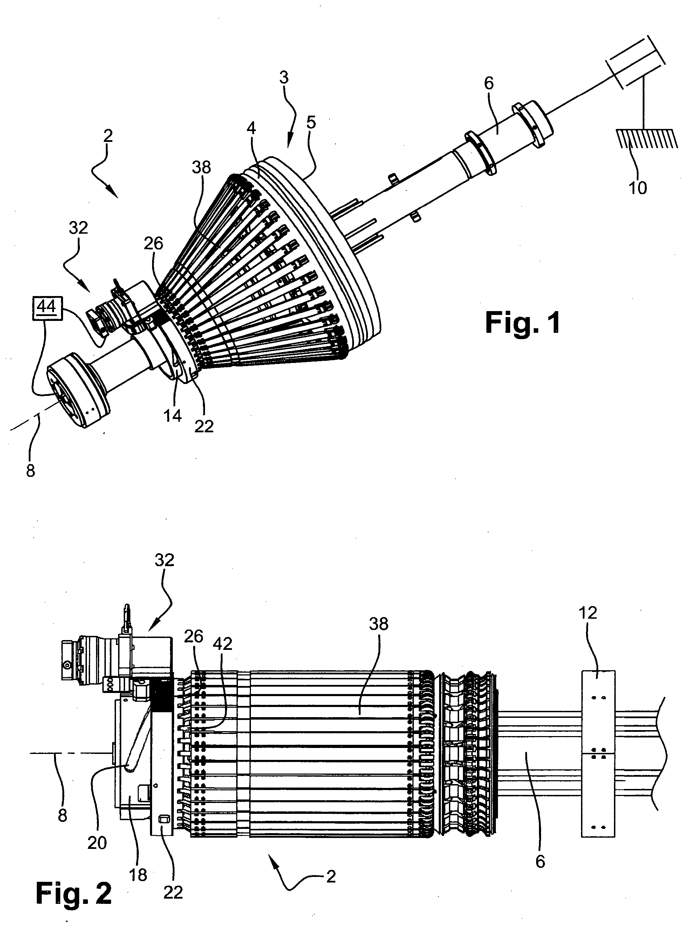

On a illustré en figures 1 et 2 une installation de fabrication d'ébauches de pneumatiques 2 selon un premier mode de réalisation de l'invention. Cette installation est destinée à réaliser un retroussage d'une ébauche de pneumatique 3 dotée d'un sommet 4 et de deux flancs 5 situés de part et d'autre du sommet 4. L'installation 2 est adaptée pour la fabrication de tout type de pneumatique.

L'installation 2 comprend un fût 6, ici de forme générale cylindrique, présentant un axe principal 8. L'installation 2 présente une forme générale à symétrie de révolution autour de cet axe 8. Le fût 6 est monté mobile en rotation par rapport à un bâti 10 de l'installation 2 autour de l'axe principal 8. Le fût 6 présente sur une face externe un socle 12 destiné à recevoir l'ébauche 3 en vue de son retroussage. Le fût 6 fait partie d'un tambour cylindrique d'axe 8 permettant la confection d'une ébauche de pneumatique en déposant successivement différentes couches à base d'élastomères, renforcées ou pas, ainsi que les éléments annulaires du talon. Un tel tambour comprend des gorges de réception circonférentielles extensibles radialement destinées à recevoir les talons d'une ébauche de carcasse et des éléments de type généralement connu permettant de réaliser la conformation de celle-ci.

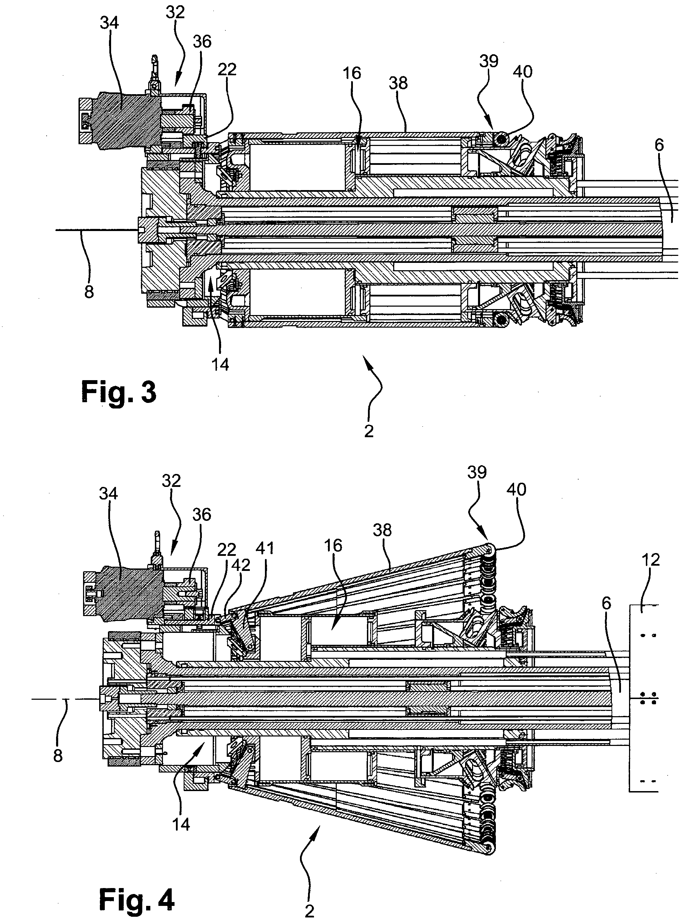

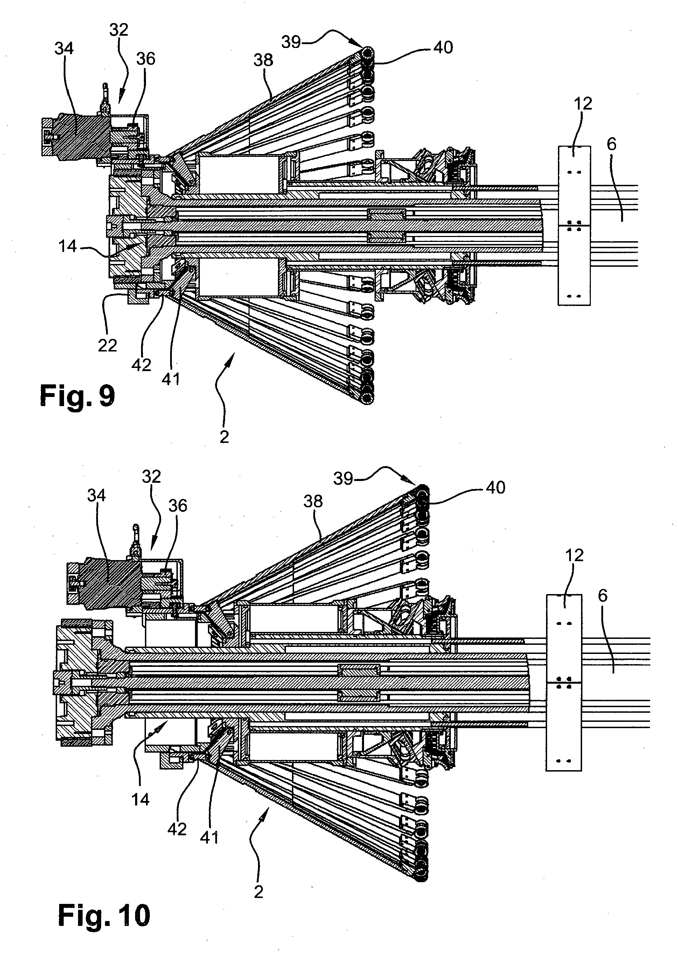

L'installation 2 comprend un support 14 monté coulissant par rapport au fût 6 coaxialement à ce dernier et sur ce dernier. Le support 14 peut être entrainé en coulissement sur le fût 6 par des premiers moyens d'entrainement 16 ménagés sur le fût 6. Les premiers moyens d'entrainement 16 comprennent ici un vérin, en l'espèce un vérin pneumatique annulaire. Ce vérin est représenté en figures 3 et 4. On peut toutefois prévoir de remplacer ce vérin pneumatique annulaire par tout autre moyen d'entrainement apte à faire coulisser le support 14 par rapport au fût 6. Le coulissement du support 14 est notamment illustré dans les figures 3 et 4, ainsi que dans les figures 9 et 10.

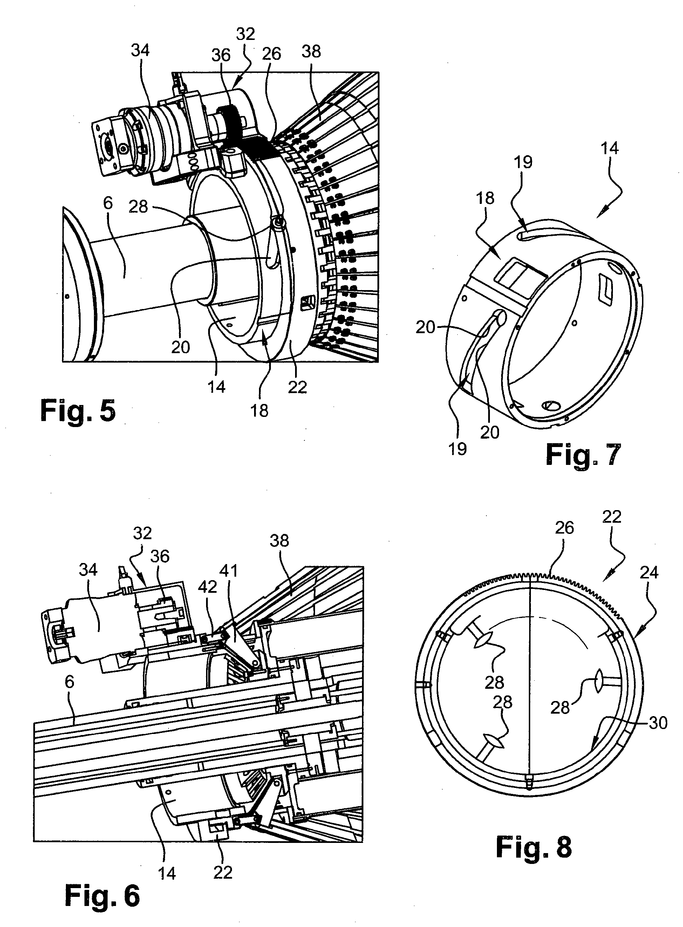

Le support 14 est illustré plus en détails sur la figure 7. Il présente une face externe 18 de forme générale cylindrique. Au moins une gouttière en forme d'hélice 19 est ménagée sur la face externe du support 14. Les gouttières 19 sont ici au nombre de trois et forment une triple hélice. Chaque gouttière 19 présente deux rampes 20 dont on expliquera la fonction plus loin.

L'installation 2 comprend une couronne 22 montée mobile en rotation par rapport au support 14 autour de l'axe principal 8. Cette couronne 22 est ici située autour du support 14. La couronne 22 est illustrée plus en détails sur la figure 8. Elle présente sur une face externe 24 une denture 26. Ici, la denture 26 s'étend sur moins d'un quart de la face externe 24. On expliquera la fonction de la denture 26 plus loin.

La couronne 22 comprend des galets 28 fixés sur une face interne 30 de la couronne 22. Les galets 28 s'étendent dans les gouttières hélicoïdales respectives 19 du support 14 et sont aptes à s'appuyer contre les rampes 20. De la sorte, lorsque la couronne 22 tourne autour de l'axe principal 8 par rapport au support 14 dans une direction, les galets 28 s'appuient contre une première rampe 20 de chaque gouttière 19 et la couronne 22 se déplace en translation parallèlement à l'axe principal 8 par rapport au support 14. Et lorsque la couronne 22 tourne autour de l'axe principal 8 par rapport au support 14 en direction inverse, les galets 28 s'appuient contre une seconde rampe 20 de chaque gouttière 19 et la couronne 22 se déplace en translation parallèlement à l'axe principal 8 par rapport au support 14 en sens inverse. On verra dans la suite pourquoi cette conversion de mouvement est intéressante.

L'installation 2 comprend des seconds moyens d'entrainement 32 ici formés par un équipage monté mobile en translation par rapport au support 14 parallèlement à l'axe 8. Cet équipage est représenté plus détails sur les figures 5 et 6. Il comprend un moteur 34 et des moyens de couplage 36 aptes, au moyen d'un couple produit par le moteur 34, à entraîner la couronne 22 en rotation par rapport au support 14 autour de l'axe 8. Les moyens de couplage 36 sont ici formés par une roue dentée de l'arbre du moteur 34 engrenée dans la denture 26 de la couronne 22.

L'installation 2 comprend plusieurs bras 38 articulés sur le support 14. Chaque bras 38 présente une extrémité libre 39 destinée venir au contact d'une couche de gomme crue à appliquer sur l'ébauche 3. Cette extrémité libre 39 est ici munie d'une roulette 40 pour rouletter la couche de gomme crue lors de son application. Comme cela est représenté notamment en figure 5 et 6, chaque bras 38 est monté mobile en rotation autour d'un axe perpendiculaire à l'axe principal 8 par rapport au support. A cette fin, chaque bras 38 est ici directement articulé au support 14 par un pied 41 du bras qui s'étend dans une direction perpendiculaire à une partie principale du bras 38. Ainsi, en faisant coulisser le support 14, on fait également coulisser les bras 38 parallèlement à l'axe 8. On comprend que ce coulissement des bras 38 peut être effectué quelle que soit leur position. Chaque bras 38 est également relié à la couronne 22 au moyen d'une bielle 42 directement articulée d'une part au bras 38 et d'autre part à la couronne 22. Ainsi, lorsque la couronne 22 coulisse par rapport au support 14, elle entraine les bras 38 en rotation grâce aux bielles 42. Plus précisément, quand la couronne 22 s'éloigne des bras 38, elle produit la levée des bras 38 qui s'éloignent de l'axe 8.

On comprend de la sorte que :

- le couple généré par le moteur 34 entraine la couronne 22 en rotation par rapport au support 14 grâce aux moyens de couplage 36,
- la rotation de la couronne 22 permet son coulissement par rapport au support 14 grâce aux galets 28 en appui contre les rampes 20,
- la translation de la couronne 22 entraine la rotation de tous les bras 38 par rapport au support 14 grâce aux bielles 42,
- la rotation des bras 38 peut être effectuée quelle que soit leur position.

En d'autres termes, l'installation 2 comprend des moyens de conversion aptes à transformer une rotation de la couronne 22 par rapport au support 14 en une rotation des bras 38 par rapport au support 14, ces moyens de conversion étant ici formés par les rampes hélicoïdales 20, les galets 28 et les bielles 42.

L'angle d'inclinaison de l'hélice de chaque gouttière 19, et donc leur pas, et la plage angulaire de la face externe sur laquelle s'étendent la denture 26 de la face externe 24 de la couronne 22 sont choisis en fonction de la course totale sur laquelle la couronne 22 doit coulisser. En notant p le pas de l'hélice, α la plage angulaire (en radians) et *d* la course souhaitée, ces trois paramètres doivent vérifier l'inégalité suivante :

$$d \leq 2.\pi.p \, / \, \alpha$$

Ainsi, les seconds moyens d'entrainement 32, à savoir l'équipage, sont aptes à entrainer les bras 38 en rotation par rapport au support 14 indépendamment du coulissement du support 14 par rapport au fût 6. De même, les premiers moyens d'entrainement 16, à savoir le vérin électrique, sont aptes à faire coulisser le support 14 par rapport au fût 6 indépendamment d'une rotation des bras 38 par rapport au support 14. Les bras 38 possèdent de la sorte deux degrés de liberté en déplacement par rapport au bâti 10, ces deux degrés étant indépendants l'un de l'autre, si bien qu'on peut mieux piloter leur position et la pression qu'ils appliquent sur la couche de gomme crue librement par rapport à leur position et leur vitesse le long de l'axe 8.

L'installation 2 comprend un organe de pilotage 44 apte à piloter les premiers 16 et seconds 32 moyens d'entrainement pour commander une position des bras 38. On décrira dans la suite comment utiliser cet organe de pilotage 44.

On va maintenant décrire un procédé de retroussage mis en œuvre par l'installation 2. Pour simplifier la présentation de ce procédé, on ne présentera que l'application d'une couche de gomme crue sur un des deux flancs 5. Le procédé s'applique symétriquement de la même manière des deux côtés de l'ébauche 3.

On installe d'abord l'ébauche 3 sur le socle 12 du fût 6. Il s'agit à ce stade d'une ébauche de carcasse de pneumatique. Chaque bras 38 occupe une position initiale dans laquelle l'extrémité libre 39 du bras 38 est éloignée de l'ébauche 3. Les bras 38 sont dans leur configuration la plus proche de l'axe 8 et sont parallèles à ce dernier comme sur les figures 2 et 3.

On place une couche de gomme en anneau fermé sur les bras de sorte qu'une extrémité de cette couche de gomme soit en regard des extrémités libres 39 des bras 38.

Pour appliquer la couche de gomme sur le flanc 5, on fait ensuite simultanément coulisser le support 14 par rapport au fût 6 en direction de l'ébauche 3 en actionnant le vérin électrique 16 et tourner les bras 38 par rapport au support 14 en actionnant le moteur 34 de l'équipage 32.

L'actionnement du vérin 16 et celui du moteur 34 sont pilotés par l'organe de pilotage 44 de manière à faire suivre une trajectoire prédéfinie à l'extrémité libre 39 de chaque bras 38. Cela est possible car la position des extrémités libres des bras est fonction de la position du vérin 16 et de celle de la roue dentée 36 actionnée par le moteur 34. La trajectoire prédéfinie commence à la position initiale et termine à une position finale dans laquelle l'extrémité libre 39 de chaque bras 38 a atteint le sommet 4 de l'ébauche 3, c'est-à-dire lorsque la couche de gomme recouvre entièrement le flanc 5 de l'ébauche 3.

Il est possible de doter les deux côtés de l'installation 2, c'est-à-dire de part et d'autre du socle 12, de deux équipages mobiles pilotés différemment l'un de l'autre. L'installation 2 permet ainsi le retroussage d'ébauches de pneumatiques ayant des profils différents et dissymétriques.

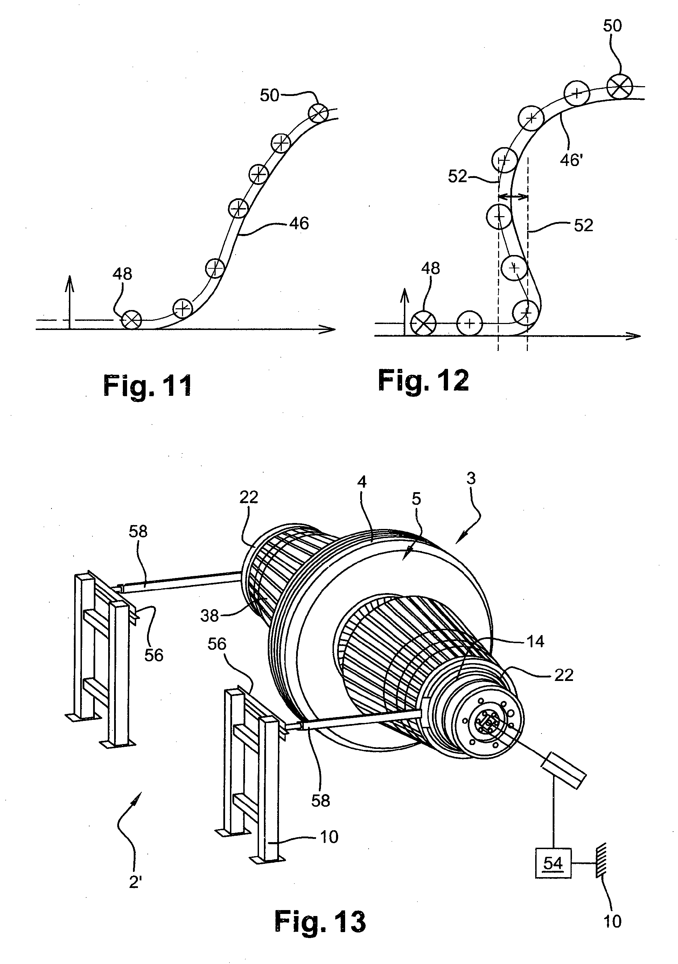

On a illustré en figure 11 un premier exemple de trajectoire prédéfinie 46, dans lequel on suit l'évolution de la position de l'extrémité libre 39 d'un bras 38 dans un repère orthogonal dont l'origine est un point du bâti 10 et dont les axes sont respectivement l'axe principal 8 et un axe radial à l'axe 8. Au cours du mouvement de l'extrémité libre 39 du bras 38, cette extrémité 39 avance constamment pendant qu'elle s'éloigne constamment de l'axe 8, les deux mouvements étant monotones.

On a illustré en figure 12 un second exemple de trajectoire prédéfinie 46'. Celui-ci diffère du premier exemple en ce que, dans une portion de la trajectoire du bras 38, son extrémité libre 39 présente une composante de mouvement qui l'éloigne d'un centre de l'ébauche 3 parallèlement à l'axe principal 8. Ce centre est par exemple un centre de gravité de l'ébauche 3. Cette composante de mouvement correspond à un recul parallèlement à l'axe principal 8. Cette portion est délimitée par les deux traits discontinus 52. Autrement dit, au cours de son mouvement, l'extrémité 39 avance, puis recule puis avance de nouveau suivant cet axe 8. Cela a lieu pendant que l'extrémité 39 s'éloigne de l'axe 8 de façon monotone. Cette trajectoire est utilisée lorsque le type d'ébauche à retrousser l'impose, par exemple s'il s'agit d'une ébauche dite « en oméga ».

On a illustré en figure 13 une installation de fabrication d'ébauches de pneumatiques 2' selon un second mode de réalisation de l'invention. On va présenter dans ce qui suit uniquement les éléments qui la différencient de l'installation selon le premier mode de réalisation.

L'installation 2' est dépourvue de l'équipage mobile.

Elle comprend un moteur de fût 54 apte à entrainer le fût 6 en rotation par rapport à un bâti 10 de l'installation 2' autour de l'axe principal 8. Etant donné que le support 14 est monté coulissant par rapport au fût 6, lorsque ce dernier tourne autour de l'axe 8, le support 14 tourne lui aussi autour de l'axe 8 en même temps que le fût 6.

L'installation 2' comprend des moyens de blocage aptes à empêcher la rotation de la couronne 22 par rapport au fût 6. Ces moyens de blocage comprennent ici un rail 56 fixé au bâti 10 de l'installation 2'. Ce rail 56 est rectiligne et présente une direction de guidage parallèle à l'axe principal 8. Les moyens de blocage comprennent également une tige 58 présentant une première extrémité montée coulissante dans le rail 56 et une seconde extrémité fixée à la couronne 22.

L'installation 2' fonctionne de la manière suivante. Lorsqu'on fait tourner le fût 6 à l'aide du moteur de fût 54, le support 14 tourne en même temps que le fût 6. La couronne 22 est quant à elle reliée au rail 56 par l'intermédiaire de la tige 58. Etant donné que le rail 56 guide la tige 58 parallèlement à l'axe 8, le rail 56 empêche la couronne 22 d'être également entrainée en rotation autour de l'axe 8 par rapport au bâti 10. La couronne 22 ne tourne pas donc par rapport au bâti 10, et, par conséquent, tourne par rapport au support 14 autour de l'axe 8. En d'autres termes, les moyens de blocage permettent de convertir une rotation du fût 6 par rapport au bâti 10 autour de l'axe 8 en une rotation de la couronne 22 par rapport au support 14 autour de l'axe 8. Et donc comme dans le premier mode de réalisation,

- la rotation de la couronne 22 permet le coulissement de la couronne 22 par rapport au support 14 grâce aux rampes hélicoïdales 20 et aux galets 28,
- la translation de la couronne 22 entraine la rotation de tous les bras 38 par rapport au support 14 grâce aux bielles 42.

Lorsque les premiers moyens d'entrainement, à savoir le vérin électrique 16, entrainent le support 14 en coulissement, le rail 56 permet à la tige 58 de ne pas gêner le coulissement du support 14 et de la couronne 22 grâce à son guidage parallèlement à la direction de coulissement, à savoir l'axe 8.

Il est possible de doter les deux côtés de l'installation 2', c'est-à-dire de part et d'autre du socle 12, de deux ensembles comprenant un moteur de fût, un rail et une tige, ces ensembles étant pilotés différemment l'un de l'autre. L'installation 2' permet ainsi le retroussage d'ébauches de pneumatiques ayant des profils différents et dissymétriques.

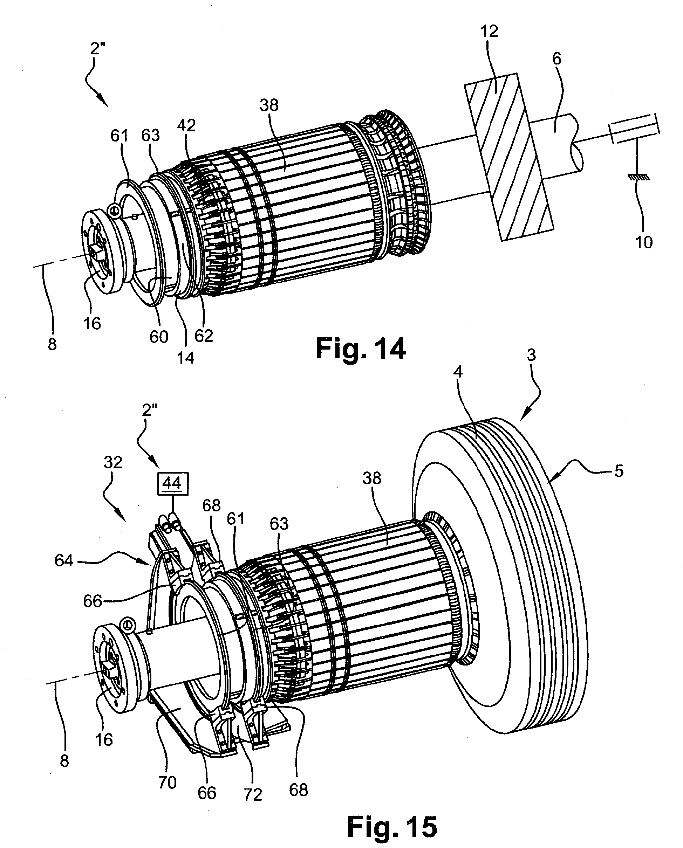

On a illustré en figures 14 à 21 une installation de fabrication d'ébauches de pneumatiques 2" selon un troisième mode de réalisation. On va présenter dans ce qui suit uniquement les éléments qui la différencient de l'installation selon le premier mode de réalisation.

Le support 14 comprend ici un premier organe de connexion 60, dit organe de connexion principal, monté coulissant par rapport au fût 6 coaxialement à ce dernier et sur ce dernier.

Une nervure annulaire, dite nervure principale 61, s'étend radialement en saille d'une surface de l'organe de connexion principal 60 sur l'intégralité de sa circonférence.

Le support 14 comprend aussi un second organe de connexion 62, dit organe de connexion secondaire, monté coulissant par rapport à l'organe de connexion principal 60 coaxialement à ce dernier et sur ce dernier. L'organe de connexion secondaire 62 s'étend ainsi autour de l'organe de connexion principal 60. Il présente toutefois une longueur parallèlement à l'axe 8 inférieure à celle de l'organe de connexion principal 60, si bien que l'organe de connexion secondaire 62 ne recouvre que partiellement l'organe de connexion principal 60 comme cela est notamment visible sur la figure 14.

L'organe de connexion principal 60 et l'organe de connexion secondaire 62 sont ici chacun formé par un manchon d'axe parallèle à l'axe 8. L'organe de connexion principal 60 sera désigné par l'expression « manchon principal » et l'organe de connexion secondaire sera désigné par l'expression « manchon secondaire ».

Une nervure annulaire, dite nervure secondaire 63, s'étend radialement en saille d'une surface du manchon secondaire 62 sur l'intégralité de sa circonférence. La nervure secondaire 63 est plus proche du socle 12 que la nervure principale 61. On verra dans la suite quelles sont les fonctions des nervures principale 61 et secondaire 63.

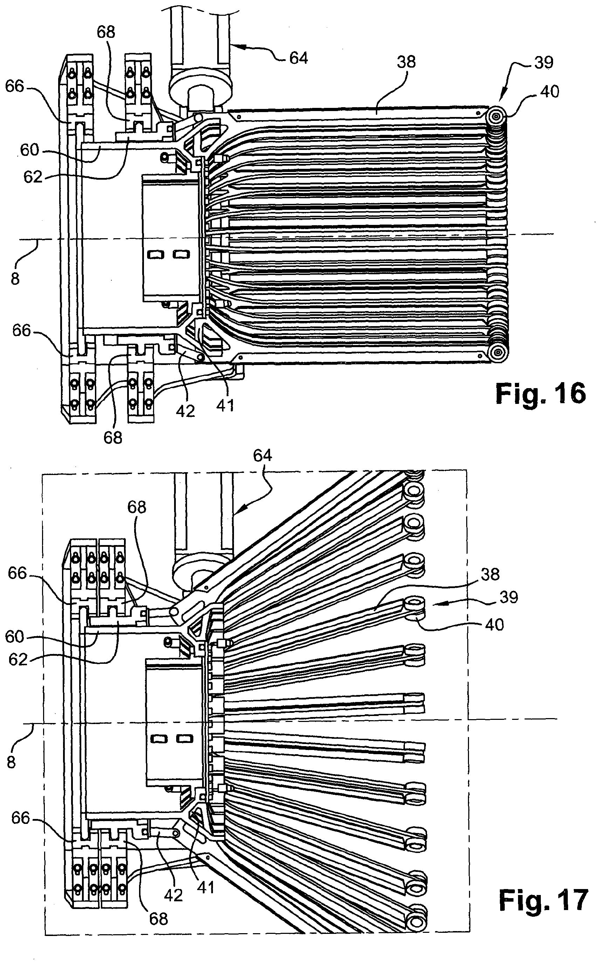

Chaque bras 38 est articulé directement au manchon principal 60 par le pied 41 du bras 38 et, indépendamment de cela, est relié au manchon secondaire 62 au moyen de la bielle 42 directement articulée au bras 38 et au manchon secondaire 62. L'articulation des bras 38 aux manchons notamment visible sur les figures 16 et 17.

Les moyens d'entrainement 32 de l'installation 2" comprennent une station motorisée 64 indépendante du fût 6 ou externe au fût 6. Cela signifie qu'il est possible d'écarter la station motorisée 64 du fût 6 lorsqu'elle n'est pas utilisée.

La station motorisée 64 comprend au moins une première fourche 66, dite fourche principale, apte à recouvrir et déplacer la nervure principale 61 suivant la direction de l'axe 8. Elle comprend également au moins une seconde fourche 68, dite fourche secondaire, apte à recouvrir et déplacer la nervure secondaire 63.

Les fourches principales 66 sont ici au nombre de deux et sont portées par une première plaque de support 70 de la station motorisée 64. De même, les fourches secondaires 68 sont ici au nombre de deux et sont portées par une seconde plaque de support 72 de la station motorisée 64. Les fourches 66, 68 et les plaques de support 70, 72 sont illustrés en figure 15. On peut prévoir de doter chaque plaque de support 70, 72 d'un nombre de fourches supérieur à deux dans le but d'améliorer la préhension des nervures principale 61 et secondaire 63.

Les plaques de support 70, 72 présentent ici chacune la forme d'un secteur de couronne s'étendant dans des plans perpendiculaires à l'axe 8 et sur une plage angulaire inférieure à 180°. Ici, les secteurs s'étendent sur une plage angulaire comprise entre 150° et 180°. Sur chaque secteur de couronne, les deux fourches sont placées à des extrémités libres des secteurs de couronne. De la sorte, les fourches sont pratiquement diamétralement opposées en considérant l'axe 8, ce qui permet d'optimiser la préhension des nervures principale 61 et secondaire 63.

La première plaque de support 70 est rigidement solidaire de la station motorisée 64. La seconde plaque de support 72 est elle montée coulissante par rapport à la première plaque de support 70 parallèlement à l'axe 8.

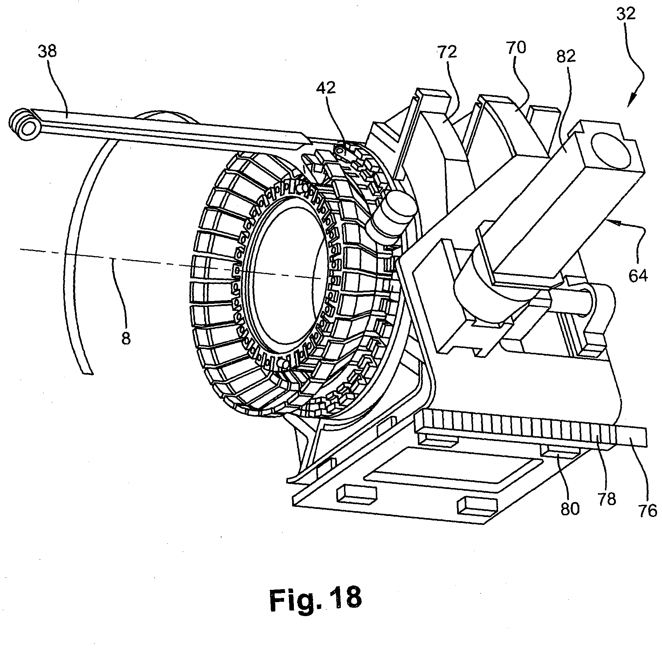

La station motorisée 64 comprend des moyens de poussée aptes à faire coulisser la première plaque de support 70 par rapport au bâti 10 parallèlement à l'axe 8 et aptes à faire coulisser la seconde plaque de support 72 par rapport à la première plaque de support 70 parallèlement à l'axe 8. Comme cela est illustré en figure 18, c'est un premier moteur 76, couplé avec une crémaillère 78 guidée par des patins 80, qui fait coulisser la première plaque de support 70, et c'est un bloc moteur 82, comprenant ici un second moteur, un réducteur et un mécanisme à vis et écrou (non représentés), qui fait coulisser la seconde plaque de support 72. Les moyens de poussée effectuent le coulissement des plaques de support 70, 72 en appliquant un effort axial sur ces plaques de support 70, 72.

On va maintenant décrire comment fonctionne l'installation 2".

On installe d'abord l'ébauche 3 sur le socle 12 du fût 6. Il s'agit à ce stade d'une ébauche de carcasse de pneumatique. Chaque bras 38 occupe une position initiale dans laquelle l'extrémité libre 39 du bras 38 est éloignée de l'ébauche 3. Les bras 38 sont dans leur configuration la plus proche de l'axe 8 et sont parallèles à ce dernier.

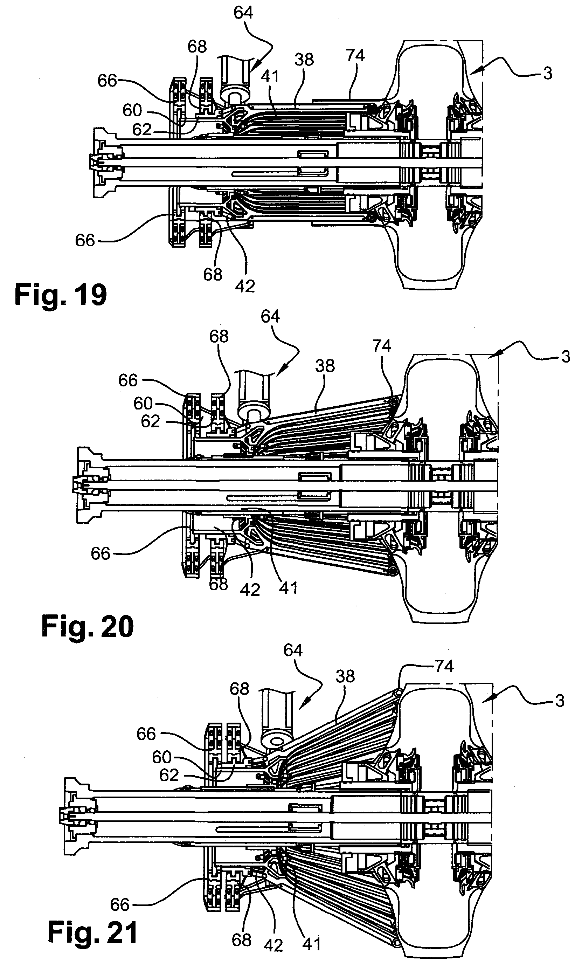

On place une couche de gomme en anneau fermé 74 sur les bras 38 de sorte que la couche a une configuration cylindrique à section circulaire et qu'une extrémité axiale de cette couche de gomme 74 soit en regard des extrémités libres 39 des bras 38. L'installation 2" a alors la configuration illustrée en figure 19.

Pour appliquer la couche de gomme 74 sur le flanc 5, on fait simultanément coulisser la station motorisée 64 en direction de l'ébauche 3 et coulisser la seconde plaque de support 72 en direction de la première plaque de support 70, c'est-à-dire en l'éloignant de l'ébauche 3, grâce aux moyens de coulissement (non représentés).

Ces deux coulissements sont pilotés par l'organe de pilotage 44 de manière à faire suivre une trajectoire prédéfinie à l'extrémité libre 39 de chaque bras 38. Cela est possible car la position des extrémités libres des bras est fonction de la position des première 70 et seconde 72 plaques de support. En effet, grâce aux pieds 41 et aux bielles 42, un déplacement de la seconde plaque de support 72 par rapport à la première entraine la rotation des bras 38 et un coulissement de la première plaque de support 70 en direction de l'ébauche 3 entraine le coulissement des bras 38 en direction de l'ébauche 3. On passe alors à la configuration illustrée en figure 20, dans laquelle la couche de gomme 74 est partiellement appliquée sur le flanc 5 de l'ébauche 3.

En continuant les deux coulissements, on arrive finalement à la configuration illustrée en figure 21 dans laquelle la couche de gomme 74 recouvre complètement le flanc 5.

Grâce au fait que la station motorisée 64 est externe au fût 6 et indépendante de celui-ci, on peut doter les deux côtés de l'installation 2, c'est-à-dire de part et d'autre du socle 12, de deux stations motorisées pilotées différemment l'une de l'autre. L'installation 2" permet ainsi le retroussage d'ébauches de pneumatiques ayant des profils différents et dissymétriques.

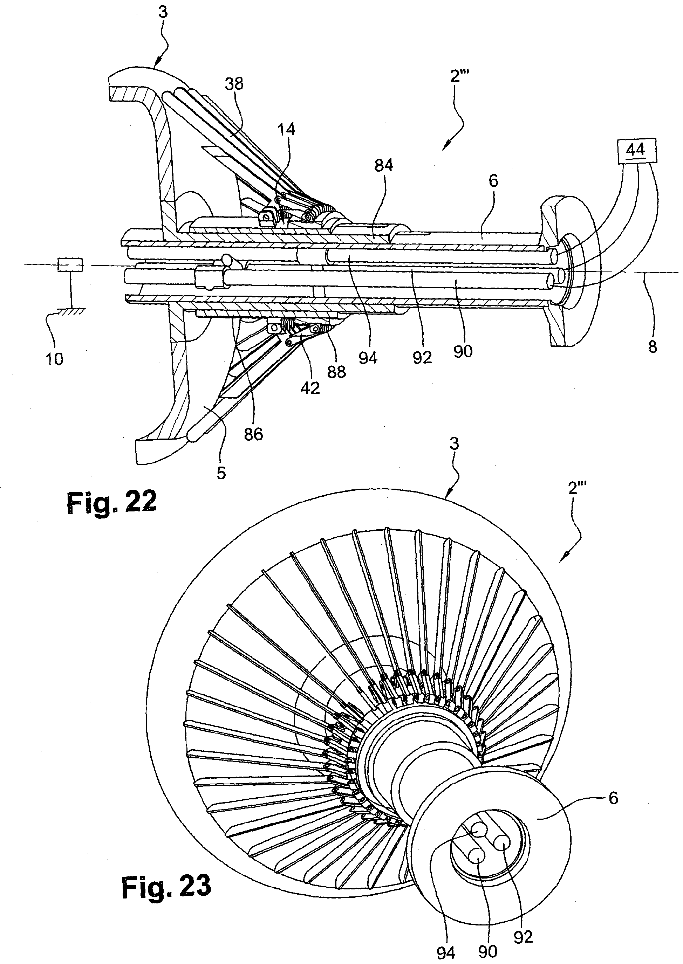

On a illustré en figures 22 et suivantes une installation de retroussage 2''' selon un quatrième mode de réalisation. On va présenter dans ce qui suit principalement les éléments qui la différencient de l'installation selon le troisième mode de réalisation. Comme cela est visible sur les figures 22 et 23, l'installation 2''' s'en démarque notamment en ce que les moyens d'entrainement des bras 38 respectivement en coulissement et en rotation sont logés à l'intérieur du fût 6. Cela permet de réduire l'encombrement de l'installation.

Les éléments portant les mêmes références numériques que dans des précédents modes de réalisation sont identiques, au moins fonctionnellement.

L'installation 2''' comporte une base 84, ici en forme de manchon, montée coulissante sur le fût 6. Un des flancs 5 de l'ébauche 3 est fixé à la base 84. Le support 14 est monté coulissant sur la base 84. Le fût 6 est lui monté pivotant par rapport à un bâti 10 de l'installation 2'''.

De manière similaire aux précédents modes de réalisation, le support 14 comprend un organe de connexion principal 86 monté coulissant par rapport à la base 84 parallèlement à l'axe principal 8. Le support 14 comprend aussi un organe de connexion secondaire 88 monté coulissant par rapport à l'organe de connexion principal 86 parallèlement à l'axe 8.

Les bras de retroussage 38 sont montés pivotant sur l'organe de connexion principal 86. Ils sont également reliés à l'organe de connexion secondaire au moyen de bielles 42.

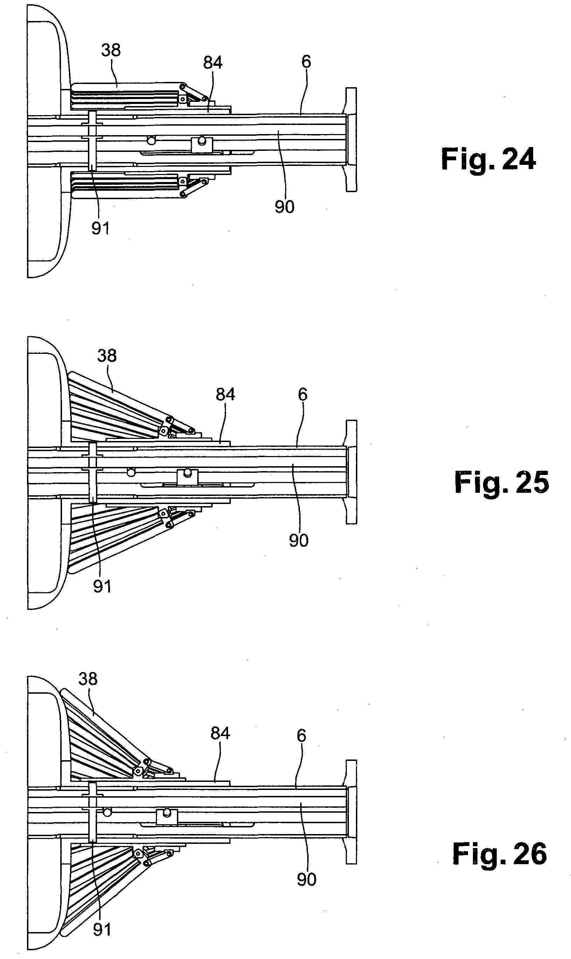

En référence aux figures 24 à 26, l'installation 2''' comporte des premiers moyens d'entrainement 90 aptes à faire coulisser la base 84 parallèlement à l'axe 8 par rapport au fût 6. Ces moyens d'entrainement 90 sont situés à l'intérieur du fût 6.

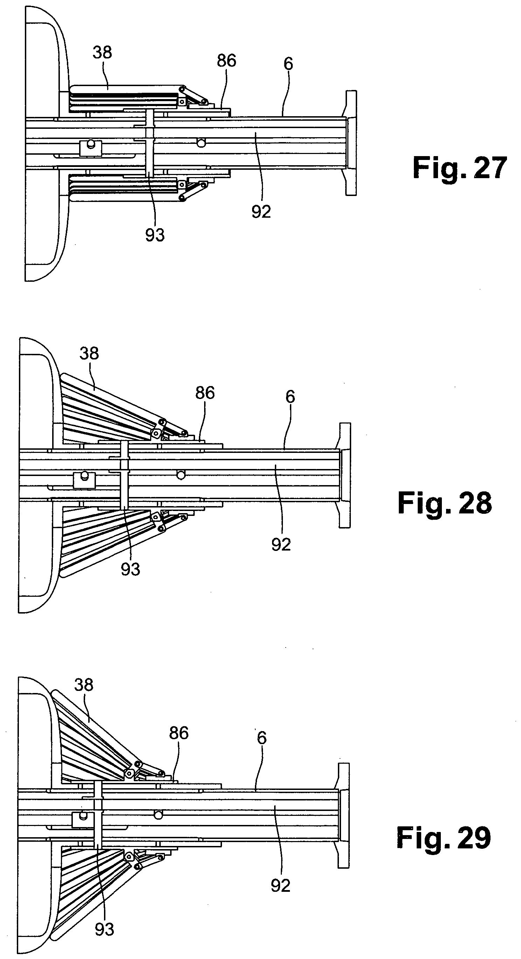

En référence aux figures 27 à 29, l'installation 2''' comporte des deuxièmes moyens d'entrainement 92 aptes à faire coulisser l'organe de connexion principal 86 parallèlement à l'axe 8 par rapport au fût 6. Cela a pour effet de faire coulisser les bras de retroussage 38 parallèlement à l'axe 8 afin de les approcher ou les éloigner de l'ébauche 3.

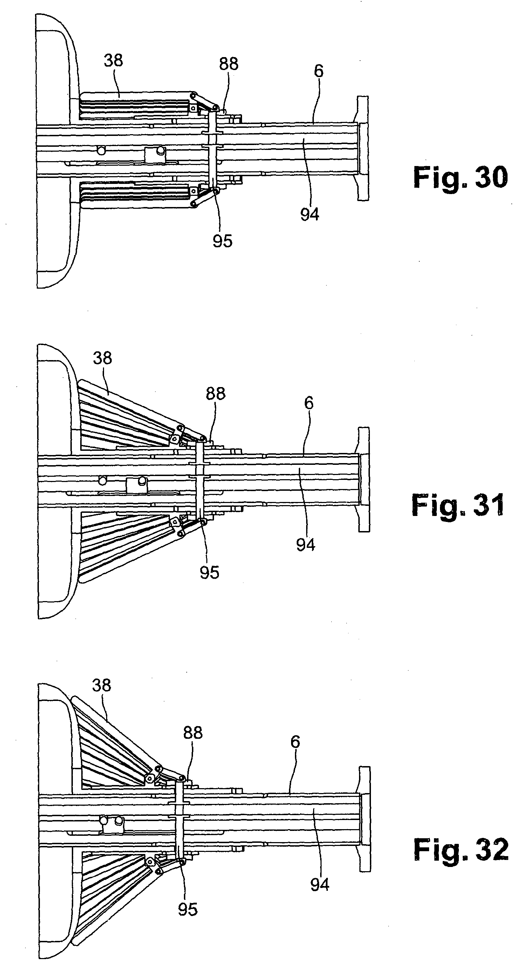

En référence aux figures 30 à 32, l'installation comporte des troisièmes moyens d'entrainement 94 aptes à faire coulisser l'organe de connexion secondaire 88 parallèlement à l'axe 8 par rapport au fût 6. Cela a pour effet de faire tourner les bras de retroussage 38, grâce aux bielles 42, afin de les approcher ou les éloigner du fût 6.

Les moyens d'entrainement 90, 92, 94 sont solidaires respectivement de la base 84, de l'organe de connexion principal 86 et de l'organe de connexion secondaire 88 au moyens de tiges 91, 93, 95 s'étendant dans des lumières du fût 6 dont une est visible sur la figure 23. Comme cela est visible sur la figure 22, les tiges sont agencées de sorte qu'elles n'entravent pas leurs déplacements respectifs.

Ici, les moyens d'entrainement 90, 92 et 94 sont chacun formés par un mécanisme vis-écrou. Ces derniers sont couplés à des moteurs (non représentés) placés sur le bâti 10 ou, dans une variante, à l'intérieur du fût 6. Les moteurs sont indépendants les uns des autres.

On peut envisager l'entraînement en rotation du fût 6 en même temps que le retroussage en plaçant des joints tournants au niveau des connecteurs électriques d'alimentation des moteurs.

Bien entendu, on pourra apporter à l'invention de nombreuses modifications sans sortir du cadre de celle-ci.

Les moyens d'entrainement décrits dans ce qui précèdent peuvent être formés par des moyens électriques. Ces derniers présentent l'avantage qu'ils permettent un meilleur pilotage, ce qui permet de mieux maitriser la position des bras et la pression qu'ils appliquent sur la couche de gomme à tout instant.

## Revendications

1. Installation de fabrication d'ébauches de pneumatiques (2 ; 2') comprenant :

   - un fût (6),
   - un support (14) monté coulissant par rapport au fût (6),
   - des bras (38) articulés au support (14), et
   - des moyens d'entrainement (32) aptes à entrainer les bras (38) en rotation par rapport au support (14) indépendamment d'un coulissement du support (14) par rapport au fût (6) et quelle que soit la position des bras (38) par rapport à l'ébauche, **caractérisée en ce qu'**elle comprend :
   - une couronne (22) montée mobile en rotation par rapport au support (14) autour d'un axe principal (8) du fût (6), et
   - des moyens de conversion (20, 28, 42) d'une rotation de la couronne (22) en une rotation des bras (38) par rapport au support (14),

   les moyens de conversion comprenant au moins une rampe hélicoïdale (20) ménagée sur une face externe (18) du support (14) ainsi qu'au moins un galet (28) en appui contre la rampe (20) et fixé à la couronne (22).

2. Installation (2 ; 2') selon la revendication précédente, dans laquelle les moyens de conversion comprennent, pour chaque bras (38), une bielle (42) reliant le bras (38) à la couronne (22).

3. Installation (2) selon l'une quelconque des revendications 1 et 2, dans laquelle les moyens d'entrainement (32) comprennent un équipage comprenant :

   - un moteur (34), et
   - des moyens de couplage (36) aptes, au moyen d'un couple produit par le moteur (34), à entraîner la couronne (22) en rotation par rapport au support (14) autour de l'axe principal (8).

4. Installation (2') selon l'une quelconque des revendications 1 et 2, dans laquelle les moyens d'entrainement (32) comprennent :

   - un moteur de fût (54) apte à entrainer le fût en rotation par rapport à un bâti (10) de l'installation (2) autour de l'axe principal (8), et
   - des moyens de blocage aptes à empêcher la rotation de la couronne (22) par rapport au fût (6).

5. Installation (2 ; 2') selon l'une quelconque des revendications précédentes, comprenant en outre un organe de pilotage (44) apte à piloter les moyens d'entrainement (16, 32) pour commander une position des bras (38).


## Patentansprüche

1. Anlage zur Herstellung von Reifenrohlingen (2; 2'), welche umfasst:

   - einen Schaft (6),
   - einen Träger (14), der in Bezug auf den Schaft (6) verschiebbar gelagert ist,
   - Arme (38), die am Träger (14) angelenkt sind, und
   - Antriebsmittel (32), die geeignet sind, die Arme (38) in Bezug auf den Träger (14) drehend anzutreiben, unabhängig von einer Verschiebung des Trägers (14) in Bezug auf den Schaft (6) und unbesehen der Position der Arme (38) in Bezug auf den Rohling,

   **dadurch gekennzeichnet, dass** sie umfasst:

   - ein Hohlrad (22), das in Bezug auf den Träger (14) drehbeweglich um eine Hauptachse (8) des Schaftes (6) gelagert ist, und
   - Mittel zur Umwandlung (20, 28, 42) einer Drehung des Hohlrades (22) in eine Drehung der Arme (38) in Bezug auf den Träger (14),

   wobei die Mittel zur Umwandlung wenigstens eine schraubenförmige Rampe (20), die auf einer Außenseite (18) des Trägers (14) ausgebildet ist, sowie wenigstens eine Rolle (28), die an der Rampe (20) anliegt und an dem Hohlrad (22) befestigt ist, umfassen.

2. Anlage (2; 2') nach dem vorhergehenden Anspruch, wobei die Mittel zur Umwandlung für jeden Arm (38) eine Schubstange (42) umfassen, die den Arm (38) mit dem Hohlrad (22) verbindet.

3. Anlage (2) nach einem der Ansprüche 1 und 2, wobei die Antriebsmittel (32) eine Einrichtung umfassen, welche umfasst:

   - einen Motor (34), und
   - Kopplungsmittel (36), die geeignet sind, mittels eines von dem Motor (34) erzeugten Drehmoments das Hohlrad (22) in Bezug auf den Träger (14) um die Hauptachse (8) drehend anzutreiben.

4. Anlage (2') nach einem der Ansprüche 1 und 2, wobei die Antriebsmittel (32) umfassen:

   - einen Schaftmotor (54), der geeignet ist, den Schaft in Bezug auf ein Gestell (10) der Anlage (2) um die Hauptachse (8) drehend anzutreiben, und
   - Blockiermittel, die geeignet sind, die Drehung des Hohlrades (22) in Bezug auf den Schaft (6) zu verhindern.

5. Anlage (2; 2') nach einem der vorhergehenden Ansprüche, welche außerdem ein Steuerungsorgan (44) umfasst, das geeignet ist, die Antriebsmittel (16, 32) zu steuern, um eine Position der Arme (38) zu steuern.


## Claims

1. Unit for producing green tyres (2; 2'), comprising:

   - a shaft (6),
   - a holder (14) mounted so as to slide with respect to the shaft (6),
   - arms (38) articulated to the holder (14), and
   - driving means (32) that are able to drive the arms (38) in rotation with respect to the holder (14) independently of any sliding of the holder (14) with respect to the shaft (6) and regardless of the position of the arms (38) with respect to the green tyre, **characterized in that** it comprises:

- a ring (22) mounted so as to be rotatable about a main axis (8) of the shaft (6) with respect to the holder (14), and
- conversion means (20, 28, 42) for converting a rotation of the ring (22) into a rotation of the arms (38) with respect to the holder (14),

the conversion means comprising at least one helical ramp (20) formed on an external face (18) of the holder (14), and at least one roller (28) that bears against the ramp (20) and is fastened to the ring (22).

2. Unit (2; 2') according to the preceding claim, wherein the conversion means comprise, for each arm (38), a link (42) connecting the arm (38) to the ring (22).

3. Unit (2) according to either one of Claims 1 and 2, wherein the driving means (32) comprise a set of gear comprising:

- a motor (34), and
- coupling means (36) that are able, by means of a torque produced by the motor (34), to drive the ring (22) in rotation about the main axis (8) with respect to the holder (14).

4. Unit (2') according to either one of Claims 1 and 2, wherein the driving means (32) comprise:

- a shaft motor (54) that is able to drive the shaft in rotation about the main axis (8) with respect to a stand (10) of the unit (2), and
- immobilizing means that are able to prevent the rotation of the ring (22) with respect to the shaft (6).

5. Unit (2; 2') according to any one of the preceding claims, also comprising a control member (44) that is able to control the driving means (16, 32) to position the arms (38).

**Fig. 1**

**Fig. 2**

EP 3 458 254 B1

**Fig. 3**

**Fig. 4**

12

**Fig. 5**

**Fig. 7**

**Fig. 6**

**Fig. 8**

EP 3 458 254 B1

**Fig. 9**

**Fig. 10**

14

**Fig. 11**

**Fig. 12**

**Fig. 13**

**Fig. 14**

**Fig. 15**

**Fig. 16**

**Fig. 17**

Fig. 18

**Fig. 19**

**Fig. 20**

**Fig. 21**

**Fig. 22**

**Fig. 23**

EP 3 458 254 B1

Fig. 24

Fig. 25

Fig. 26

21

**Fig. 27**

38  86  6

93  92

**Fig. 28**

38  86  6

93  92

**Fig. 29**

38  86  6

93  92

Fig. 30

Fig. 31

Fig. 32

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006180263 A1
- JP 2010260220 A